(19) Europäisches Patentamt
European Patent Office
Office européen des brevets

(11) **EP 2 727 663 A1**

(12) **EUROPEAN PATENT APPLICATION**

(43) Date of publication:
**07.05.2014 Bulletin 2014/19**

(51) Int Cl.:
*B09C 1/08* (2006.01)    *A62D 3/11* (2007.01)
*A62D 3/33* (2007.01)    *C22B 43/00* (2006.01)

(21) Application number: **13191387.3**

(22) Date of filing: **04.11.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.11.2012 IT MI20121889**

(71) Applicant: **ENI S.p.A.**
**00144 Roma (IT)**

(72) Inventors:
• **Bagatin, Roberto**
**20025 Legnano (MI) (IT)**

• **De Battisti, Achille**
**44100 Ferrara (FE) (IT)**
• **Rosestolato, Davide**
**45019 Taglio di Po (RO) (IT)**
• **Ferro, Sergio**
**44100 Ferrara (FE) (IT)**

(74) Representative: **Bottero, Carlo et al**
**Barzano' & Zanardo Milano S.p.A.**
**Via Borgonuovo, 10**
**20121 Milano (IT)**

(54) **Process for purifying an earthy matrix contaminated by heavy metals**

(57) The present invention relates to a process for purifying an earthy matrix contaminated by heavy metals, comprising at least: (a) providing at least one cathode well inside said earthy matrix, said well comprising at least one cathode immersed in an electrolytic solution (cathodic solution) inside a cathode container permeable to liquids and ionic species; (b) providing at least one anode well inside said earthy matrix, said well comprising at least one anode immersed in an electrolytic solution (anodic solution) inside an anode container permeable to liquids and ionic species; (c) introducing water, preferably water comprising a complexing agent (complexing solution), into said earthy matrix so as to impregnate said earthy matrix until a saturation degree equal to at least 70% is reached; (d) applying a potential difference to said anode and cathode so as to make said contaminating metals migrate in the form of ionic metal complexes; (e) recovering said contaminating metals from one or more of said anodic solution, cathodic solution and soil solution of said earthy matrix.

Fig. 2

EP 2 727 663 A1

**Description**

The present invention relates to a process for purifying an earthy matrix contaminated by heavy metals.

The process of the present invention is particularly suitable for the purification *in situ* of an earthy matrix, such as a soil contaminated by heavy metals, particularly mercury.

The pollution of soil by heavy metals, in particular mercury, is one of the most critical forms of environmental pollution. Once heavy metals and their compounds have been dispersed in the soil, in fact, they can remain unaltered for long periods of time and also migrate towards aquifers, thus diffusing the pollution to other environmental matrixes.

Various methods are known in the state of the art for purifying (or reclaiming) earth contaminated by heavy metals.

The known processes can be carried out both in situ and ex *situ.* Processes *in situ* relate to various kinds of treatment of contaminated soil effected directly on the earthy matrix, which consequently do not require its removal.

*Ex situ processes,* on the contrary, comprise the removal of portions of soil to be purified and their subsequent treatment in a suitably equipped plant or site. The reclamation of earth by means of treatment in *situ* is generally more convenient from the point of view of overall costs and is therefore preferred when this can be effectively carried out.

In mercury-polluted soil, the mercury can be present in elemental form (Hg°), in the form of slightly soluble compounds of $Hg^+$ and/or $Hg^{2+}$ (chlorides, oxides or sulfides, for example) or in the form of organic complexes (for example, dimethyl-mercury, methyl- or phenyl-mercury salts). The poor solubility of mercury and its compounds in water makes their removal from the soil technically difficult and costly, from an economical point of view.

In the state of the art, electrokinetic purification processes of soil contaminated by heavy metals are becoming of growing interest due to their potentiality.

Electrokinetic processes are based on the application of electric fields to the earthy matrix, through electrodes inserted in the same, capable of inducing the migration of species having an electric charge.

The electrodes are generally inserted in the soil inside containers (electrode wells) containing an electrolytic solution. The wells are produced so as to be permeable to liquids and ionic species and are therefore in hydraulic communication with the earth.

The migration of the ionic species inside the soil substantially takes place through electromigration mechanisms and electro-osmosis.

Electromigration is the migration of the ionic species through the soil solution.

Electro-osmosis is the migration of the soil solution, which can contain ionic species, through the pore system of the soil. The electrokinetic migration of the ionic species generally takes place contemporaneously through both mechanisms.

Once the contaminating ionic species are put in motion inside the soil, due to the electric field applied, they migrate towards the electrodes. Close to the electrodes, the contaminants can be recovered in the form of species in solution, by extracting the electrolytic solutions present in the electrode wells, or by electrodeposition at the electrodes.

An example of an electrokinetic process applied in *situ* for purifying soil from contamination on the part of heavy metals (in particular, mercury), is described in EP 1090695 A1. The process described in this document provides for the introduction into the soil, through a cathode well, of a leaching system capable of complexing the contaminating metallic compounds. The leaching system consists of a solution comprising iodide, iodate and triiodide ($I_3^-$) species. Due to the difference in potential applied between cathode and anode, the ions of the leaching system migrate in the soil until they reach the contaminating species with which they react, forming ionic metal complexes. The metallic complexes, in turn under the effect of the electric field, migrate towards the anode where they are extracted together with the electrolytic solution present in the anode well. The heavy metals are then extracted from the electrolytic solution, which can be re-used in the process.

EP 1090695 A1 does not provide experimental results on the effectiveness of the process. The process described, however, has at least the disadvantage of using a relatively complex and therefore costly leaching solution, as this must contain at least three different species containing iodine in suitable concentration ratios.

Iodine-based solutions for complexing the heavy metals dispersed in soil are also used in the process described in US 5,226,545. The process of US 5,226,545 is a process effected ex *situ* wherein the earthy matrix to be purified is subjected to washing with a solution containing elemental iodine and iodide ions. The iodine species react with the contaminants of the earth forming soluble metallic complexes, which are withheld in the complexing solution. The washing solution containing the metallic complexes is then subjected to electrolysis, in order to recover the heavy metals by electrodeposition at the electrodes.

The complexing solution contains iodine and iodides in a high concentration (up to 0.5 mol/l of $I_2$ and up to 1 mol/l of I⁻). This process therefore requires a significant consumption of chemical reagents.

A further example of an electrokinetic process for the purification *in situ* of soil contaminated by heavy metals is described in WO 2005/053866. The process described in this document proposes the objective of preventing, during the treatment of the soil, the precipitation of metallic hydroxides on the surface of the cathode. The formation of hydroxides, which is caused by electrolysis reactions of water through which $H^+$ and $OH^-$ ions are formed, leads to an increase in the electric resistance between the electrodes, making the purification process less effective from an energy point of view. Part of the energy applied in the form of difference in potential (ddp) at the electrodes, is in fact converted to heat.

In WO 2005/053866, the precipitation of the hydroxides is avoided by revealing, by means of specific sensors, the occurrence of possible increases in the resistance between the electrodes and by momentarily interrupting the application of the ddp, so as to allow the dissolution of the hydroxides which have just been formed. The process is therefore relatively laborious and implies high management costs, as it is necessary to avail of specific equipment for monitoring the process.

Once the metallic hydroxides have been formed, moreover, they can obstruct the pores of the soil (clogging), significantly reducing the electrokinetic mobility of the ionic species.

In US 5,589,056, the technical problem of the formation of hydroxides is avoided by resorting to frequent additions of acids and/or bases to the electrolytic solutions in contact with the electrodes.

The objective of the present invention is to overcome the drawbacks of purification processes of soil from contamination by heavy metals, known in the art.

Within this general objective, an objective of the present invention is to provide a process for the purification of soil contaminated by heave metals, in particular mercury, which is effective and at the same time easy to effect and manage.

A further objective is to provide a process for the purification of soil contaminated by heave metals, in which it is possible to prevent, or at least reduce, the formation of hydroxides capable of obstructing the pores of the soil treated.

These objectives, according to the present invention, are achieved by means of a process for purifying an earthy matrix contaminated by heavy metals comprising at least the following phases:

> a) providing at least one cathode well inside said earthy matrix, said well comprising at least one cathode immersed in an electrolytic solution (cathodic solution) inside a cathode container permeable to liquids and ionic species;
> b) providing at least one anode well inside said earthy matrix, said well comprising at least one anode immersed in an electrolytic solution (anodic solution) inside an anode container permeable to liquids and ionic species;
> c) introducing water, preferably water comprising a complexing agent (complexing solution), into said earthy matrix so as to impregnate said earthy matrix until a saturation degree equal to at least 70% is reached;
> d) applying a potential difference to said anode and cathode so as to make said contaminating metals migrate in the form of ionic metal complexes;
> e) recovering said contaminating metals from one or more of said anodic solution, cathodic solution and soil solution of said earthy matrix.

Further characteristics of the process according to the present invention are specified in the dependent claims.

The process according to the present invention can be applied to the purification of an earthy matrix contaminated by heavy metals, such as natural earth or a material comprising stone aggregates in various forms and dimensions, such as sand, grit or gravel.

The Applicants have found that an effective removal of heavy metals from an earthy matrix in which they are dispersed, can be obtained by effecting the electrokinetic migration of the metallic species under suitable saturation conditions of the earthy matrix.

The saturation degree of the earthy matrix, i.e. the ratio between the volume of water present in the matrix and the volume of empty fractions, favours the mobility of the ionic species inside the earthy matrix under the action of the electric field, according to the electromigration mechanism and also according to the electro-osmosis mechanism. The higher the saturation degree, the greater the mobility of the ionic species inside the earthy matrix will be.

For the purposes of the present invention, the saturation of the earthy matrix to be purified must be equal to at least 70%, preferably equal to at least 80%, even more preferably equal to at least 90%.

For the purposes of the present invention, the saturation values of the earthy matrix are those measured according to the following procedure.

A sample of the earthy matrix to be purified is taken; in the case of surface soil, the layer of turf is removed (first 2-5 cm). The sample collected is immediately weighed to obtain the wet weight (PU). The sample is then left to dry in an oven at 105°C for at least 12 hours, occasionally controlling its weight, and possibly remixing the matrix to guarantee a homogeneous drying. Once a constant weight has been reached between two consecutive weighings (taken at an interval of at least one hour from each other), the dry weight is registered (PS). The percentage of humidity

(U%) is calculated as a percentage ratio between the difference in the weights revealed (PU-PS) and the initial weight of the sample (PU):

$$U\% = ((PU-PS)/PU)*100$$

An aliquot of the dry soil obtained (for example, 250 cm$^3$) is placed in a graded, clean, dry cylinder, and a known quantity of distilled water (for example, 150 cm$^3$) is added; the mixture is shaken and left to rest for a few minutes to favour the outlet of air. Due to the presence of air in the sample of soil, the final volume (water + soil) will be lower than the sum of the volumes used; the following values are then calculated:

$$pore\ volume\ of\ the\ earth = (volume\ of\ soil + volume$$

$$of\ water)\ -\ final\ volume.$$

The porosity percentage value is calculated:

$$Porosity\ \% = (pore\ volume/soil\ volume)\ *100$$

The saturation degree of the soil (S%) is obtained as a percentage ratio between the percentage of humidity previously obtained and the porosity:

$$S\% = (U\%\ /\ porosity\%)\ *100.$$

When the saturation degree of the earthy matrix to be treated is not sufficiently high, it can be increased by introducing water into its interior. In an application of the process *in situ* on natural earth, the water can be introduced by injections into the subsoil through one or more wells in hydraulic communication with the earth.

In the following description, the wells in hydraulic communication with the earth and comprising at least one electrode, are indicated as electrode wells, whereas those mainly or exclusively destined for the introduction and/or removal of fluids are indicated as auxiliary wells.

The water is typically introduced by means of one or more wells selected from electrode wells and auxiliary wells. The water is preferably introduced through both electrode and auxiliary wells.

In order to allow a more effective migration of the contaminating metals, water comprising at least one complexing agent (complexing solution) is preferably introduced into the earthy matrix. Said complexing solution preferably comprises iodide ions (I⁻).

The use of water without the addition of complexing agents or a complexing aqueous solution depends on the characteristics of the earthy matrix to be treated. When the earthy matrix contains ionic species capable of forming ionic complexes with the contaminating metals, for example, the process can be effected by introducing water without the addition of complexing agents. When the use of a complexing solution is chosen, the above phase (c) preferably comprises at least the following phases:

(c1) introducing water into said earthy matrix so as to impregnate said earthy matrix until a saturation degree equal to at least 70% is reached;
(c2) introducing a complexing solution into said earthy matrix to form ionic metal complexes with said contaminating metals.

In this way, in fact, the consumptions of complexing agent are reduced.

Although there is no intention of referring to any particular theory herein, it is believed that the formation of ionic metal complexes is due to the combined action of the complexing species and potential difference applied at the electrodes.

Generally, the concentration of the iodide ions in the complexing solution, as also other operative parameters of the process, is selected in relation to the characteristics of the solid matrix to be treated, and also the type and concentration of the contaminants.

The complexing solution can be prepared by dissolving an iodide salt in water, such as for example an alkaline or alkaline-earth iodide. The salt used is preferably potassium iodide (KI).

Generally, the concentration of the iodide ions or other complexing agent in the complexing solution ranges from 0.01 to 1 mol/l, preferably from 0.02 to 0.5 mol/l.

The complexing solution based on iodide ions can possibly comprise small quantities of other species containing iodine (e.g. iodates, triiodides).

The complexing solution is typically introduced into the earthy matrix through one or more wells selected from electrode wells and auxiliary wells. The complexing solution is preferably introduced through both electrode and auxiliary wells.

Although there is no intention of referring to any particular theory herein, it is believed that an aqueous solution containing iodide ions (with the function of complexing agent) in any case exerts an effective complexing action with respect to metallic contaminants even without the addition of oxidizing species (such as iodized oxidants), as the electric field which passes through the earthy matrix in any case exerts an oxidizing action which is sufficient for oxidizing the metallic species initially present in non-ionic form.

With particular reference to mercury, it should be noted that when immersed in an electric field, a drop of this metal is capable of acting as bipolar electrode, acquiring an anodic polarization (positive) on the side facing the cathode, and a cathodic polarization (negative) on the side facing the anode of the polarization circuit. When subjected to anodic polarization, the drop of mercury undergoes a dissolution process by corrosion and, in the presence of iodide ions, there can be the formation of a stable $HgI_4^{2-}$ complex which allows its effective migration towards the anode.

Once the contaminating compounds have been transformed into ionic metal complexes by the action of the complexing agents originally present in the earthy matrix or specifically added by means of the complexing solution, they are cause to migrate electrokinetically inside the solid matrix by the application of an electric field.

For this purpose, at least two electrodes, an anode and a cathode, are inserted in the solid matrix, between which a potential difference (ddp) is applied. As is known, due to the ddp applied, an electric field is established inside the solid matrix, under whose force the ionic species positively charged are entrained towards the electrode negatively charged (cathode) whereas those charged negatively are entrained towards the electrode positively charged (anode).

For the purposes of the present invention, the electrodes used can be made of a material selected from those typically used in electrokinetic purification processes. The electrodes are preferably based on carbonaceous material (graphite, vitreous carbon, carbon tissues), or silicon cast irons, or also selected from dimensionally stable anodes (titanium either partially or totally coated with metals or oxides of elements of group VIIIB, possibly mixed with oxides of elements of groups IVB and VB).

In a preferred embodiment, electrodes are used which are made of a material that is such as to allow it to be used as both anodes and cathodes, thus allowing polarity inversion during the electrokinetic process. An example of these electrodes are Ti/MMO (MMO: mixed metal oxide) electrodes, based on titanium coated with a mixture of metal oxides, typically comprising $IrO_2$ or $RuO_2$.

In order to effect the process of the present invention, the electrodes are inserted into the earthy matrix inside electrode wells.

An electrode well (anode or cathode well) comprises a container (anodic or cathodic) in which an electrode (for example, an anode or a cathode) is positioned. The container is produced so as to be permeable to liquids and ionic species, so that it is in hydraulic communication with the ground. For this purpose, for example, permeable materials can be used such as porous ceramic materials or materials based on polymers such as polyvinylchloride (PVC), polyethylene (PE), high-density polyethylene (HDPE) and coupled PVC-PE films made permeable by applying suitable holes or slits.

The electrode is at least partially immersed in an electrolytic solution, inside the container. At the beginning of the process, this solution is water or the complexing solution introduced into the earthy matrix to favour the migration of the contaminating metallic species.

The electrode wells of the type used in the present invention, can be produced with materials and techniques known in the art.

For the purposes of the present invention, electrode wells in which the container consists of a plurality of layers of materials, are particularly preferred. An example of these wells with multilayer walls is provided in US 5,589,056. The multilayer wells described in this document have walls consisting of layers of material having different hydraulic permeability and electro-osmotic permeability characteristics. In particular, in these wells, the housing is composed of at least one rigid and porous internal layer, having a high hydraulic permeability and a low electro-osmotic permeability (for example, a layer of perforated HDPE) and at least one outer layer having a low hydraulic permeability and a high electro-osmotic permeability (for example, a layer of clay).

For the purposes of the present invention, the electrode wells and auxiliary wells are preferably produced so as to limit the diffusion of liquids towards the lower layers of the earthy matrix or soil. The downward diffusion can be controlled by laying a layer of material hydraulically impermeable (for example, a layer of impermeable clay) on the bottom of the well.

As already indicated, as the container of the electrode wells is in hydraulic communication with the earth, the wells can be used for introducing fluids into the earthy matrix (for example, the water necessary for impregnating the earthy matrix until it reaches the desired saturation degree) or for removing them from the same (for example, for removing the soil solution containing ionic species from the earthy matrix). For this purpose, one or more ducts are present inside the container for introducing a fluid into the well or removing it from the same, such as the complexing solution or water necessary for increasing the saturation degree of the earthy matrix.

When the ddp is applied to the electrodes, the complexed metallic species migrate into the earthy matrix towards the electrodes, so that the water or complexing solution initially introduced into the electrode wells progressively changes composition, possibly becoming impoverished in iodide ions which have migrated to complex the metallic species and becoming enriched in metallic ionic species coming from inside the earthy matrix and other anions and cations which are formed due to the numerous reactions taking place at the electrodes. In particular, close to the electrodes, the electrolysis of the water also takes place, which generates $H^+$ ions at the anode and $OH^-$ ions at the cathode. The formation of these ions produces a progressive alteration of the pH of the anode and cathode solutions. Furthermore, the migration of the $H^+$ and $OH^-$ ions, due to attraction towards the electrodes having an opposite polarity, can cause undesired phenomena, such as the dissolution of the carbonates possibly present in the matrix treated, or the precipitation of metal hydroxides inside the pores of the earthy matrix, causing its relative obstruction (clogging).

In a preferred embodiment of the present invention, in order to avoid clogging phenomena, the purification process, object of the present invention, comprises an appropriate recirculating of the electrolytic solution present inside the electrode wells (anodic and cathodic solutions).

For this purpose, after the above phase (d) for applying a ddp to the electrodes and before the above phase e) for recovering the contaminating metals, the purification process comprises the following phases:

(i) extracting at least a part of the anodic and cathodic solutions,
(ii) mixing the solutions extracted,
(iii) recirculate the mixture thus obtained to phase c) for introducing water or the complexing solution into the earthy matrix.

The recirculation of the electrolytic solution is effected by continuously removing said solution from the wells by means of specific pumping means forming part of an external hydraulic circuit.

Through this circuit, the anodic and cathodic solutions removed from the electrode wells, are mixed with each other and then re-distributed to the wells of origin.

The mixing allows the alkalinity and acidity generated by the reactions at the electrodes to be neutralized, thus avoiding an excessive increase in the concentration of $OH^-$ ions in the earthy matrix.

The mixing and recirculation of the solutions coming from the electrode wells avoids pH adjustments by the addition of acids and/or bases (or at least allows the frequency of these adjustments to be significantly reduced), as is the case, on the contrary, in the process of the known art.

The rate at which the removal, mixing and reintroduction phases of the anodic and cathodic solutions must be effected, depends on the electric current passing through the electrodes: the higher the value of the latter, the greater the rate with which the mixing of the anodic and cathodic solutions and recirculation of their mixture to the electrode wells will be.

In a further preferred embodiment, the process according to the present invention also comprises the provision of one or more auxiliary wells inside the earthy matrix. The auxiliary wells are in hydraulic connection with the earthy matrix, thus allowing the introduction into the earthy matrix, or removal therefrom, of fluids or other substances.

The auxiliary wells, in particular, can be used for impregnating the earthy matrix until saturation and/or for removing the soil solution of the earthy matrix containing ionic complexes.

The use of auxiliary wells allows the desired saturation degree to be reached more homogeneously and in a much shorter time with respect to the use of electrode wells alone.

The auxiliary wells can be produced analogously to the electrode wells, differing from these substantially in the absence of electrodes. One or more ducts connected to suitable pumping means are also present in these wells, in order to introduce or remove fluids.

When the process of the present invention involves the use of a plurality of electrode wells together with a plurality of auxiliary wells, at least two distinct hydraulic circuits should be envisaged, one for the collection and distribution of the solutions coming from the electrode wells and one for the collection and distribution of the solutions coming from the auxiliary wells.

As already mentioned, the migration of the metallic ionic species towards the electrodes ensures that, once they have reached the proximity of these, the complexed polluting metals accumulate in the anodic and cathodic solutions, increasing in concentration as the treatment of the earthy matrix is prolonged.

The extraction of the complexed heavy metals moving in the earthy matrix can be effected in various ways.

According to a first alternative, the metals are extracted in the form of dissolved ionic species, removing the solutions present in the electrode wells (anodic and cathodic) in which said species are contained.

When auxiliary wells are also used in the process, the recovery of the metallic species more advantageously comprises removal of the soil solution of the earthy matrix containing the ionic complexes from the auxiliary wells, possibly combined with the removal of the solutions from the electrode wells.

The use of auxiliary wells for the extraction of metallic contaminants significantly accelerates the whole purification process with respect to the processes known in the art in which only electrode wells are used, as the contaminating species do not necessarily have to reach the electrode wells to be able to be extracted from the earthy matrix.

During the purification process, the dewatering phase (i.e. the removal of the soil solution of the earthy matrix and/or electrolytic solutions containing metal complexes in order to recover the metallic species), from both the electrode and auxiliary wells, is effected whenever the concentration of one or more predetermined metals in the anodic and/or cathodic solution and/or in the soil solution reaches a pre-established threshold value. The dewatering phase is typically actuated when the concentration of mercury or other reference metal reaches the pre-established threshold value in one of the above solutions or soil solution. The threshold value can be typically established at about 10 ppm.

Once extracted, the solutions removed from the electrode wells and/or the aliquots of soil solution coming from the auxiliary wells, can be subjected to treatment known in the art for the recovery or abatement of the heavy metals.

The metals can be recovered, for example, by treatment of the above solutions on ion exchange resins capable of withholding the metallic ionic species. In particular, in the specific case of mercury, its recovery can be obtained by subjecting the water extracted to a first treatment on anion exchange resins, capable of capturing the $HgI_4^{2-}$ species, and subsequently to a second treatment on chelating resins for removing the remaining impurities. The anodic and cathodic solutions are preferably mixed with each other before being subjected to treatment for the removal of the metals.

The soil solution removed from the auxiliary wells can also be possibly fed to the same treatment systems.

Once the metallic pollutants have been removed, the above solutions can be possibly recycled for preparing the complexing solution to be introduced into the earthy matrix, thus reducing the water consumption of the plant.

As an alternative to the dewatering described above, the contaminating metallic species mobilized in the earthy matrix can be recovered by electrodeposition at the electrodes. In this case, the electrodes must be periodically removed from the respective wells to allow the recovery of the metals deposited on their surface.

It has been typically observed that also when extracting the metallic species in solution, removing the respective solutions from the electrode and auxiliary wells, a fraction of these species can in any case be deposited at the electrodes in metallic form and consequently a periodic cleaning of the electrodes is recommended.

The operative procedures for exploiting the process of the present invention in the case of the purification *in situ* of soil contaminated by heavy metals are illustrated in detail hereunder with reference to the enclosed schematic drawings, in which:

- figure 1 is a schematic representation of a possible arrangement of electrode and auxiliary wells for embodying the process according to the present invention;

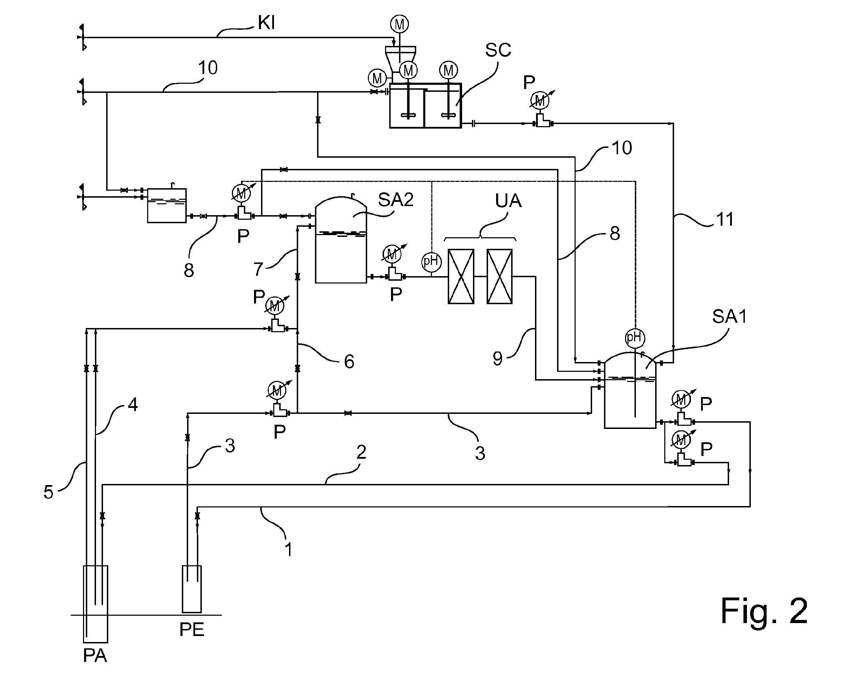

- figure 2 is a schematic block representation of a possible plant for the purification *in situ* of soil using the process of the present invention;
- figure 3 is a schematic representation of the arrangement of electrode and auxiliary wells in an ex situ embodiment of the process according to the present invention.

The first phase of the process involves the preparation in soil S to be purified, of a certain number of electrode wells PE (cathode and anode) and auxiliary wells PA.

The number of electrode wells PE and auxiliary wells PA, their reciprocal distance, their dimensions and depth, depend on numerous factors, such as the geological characteristics of the land to be decontaminated, the nature of the contaminating compounds and the extension of the contaminated area. These factors can be evaluated by an expert in the field, before proceeding with the reclamation of the soil, according to the methods typically known and applied in the field.

Each electrode well PE comprises a container (for example, made of perforated HDPE) in which an anode or cathode (not shown in the figures) are housed, an inlet duct 1 and a duct 3 for removing the electrolytic solution.

Each auxiliary well PA comprises a container (for example, made of perforated HDPE) in which an inlet duct 2 of the complexing solution and two ducts 4 and 5 for removing the soil solution are housed, the first capable of removing the soil solution at a greater depth (for example, in a layer having a greater saturation) and the second capable of removing the soil solution at a lesser depth (for example, in a layer having a lesser saturation).

The ducts 1-3 for the introduction and removal from and towards the electrode and auxiliary wells are connected to a hydraulic circuit comprising an accumulation tank SA1 and pumping means P.

Analogously, the ducts 4 and 5 for the removal of the soil solution from the auxiliary wells are connected to a hydraulic circuit comprising an accumulation tank SA2 and pumping means P.

An essential phase of the process, object of the present invention, is obtaining the desired saturation degree in the soil by injections of water. For this purpose, the water coming from the water supply network is fed through the duct 10 to the accumulation tank SA1 and from here it is introduced into the body of soil by means of the electrode and auxiliary wells, to which it is fed by means of ducts 1 and 2, respectively.

In this phase of the process, a quantity of water is introduced, which is equal to about 2/3 of the quantity theoretically necessary for reaching the desired saturation degree.

The introduction of water is subsequently interrupted, in order to start the introduction of the complexing solution.

The complexing solution is prepared in concentrated form in a specific tank SC, by mixing water and, for example, potassium iodide.

The concentrated complexing solution is then transferred through the duct 11 into the accumulation tank SA1, where it is diluted to the desired concentration (for example, 0.1 M). The complexing solution is pumped from the tank SA1 to the electrode and auxiliary wells by means of ducts 1 and 2. The water content of the complexing solution contributes to reaching the desired saturation degree for the soil.

Once regime conditions have been reached, after the introduction of the complexing solution, the process continues with the recirculation of the solutions present in the electrode wells. These solutions comprise iodide ions, complexed metallic ionic species (in particular, in the case of mercury, $HgI_4^{2-}$), possibly iodine in the form of iodide, iodate and/or triiodide ions, cations (for example $K^+$ ions introduced with the complexing solution, when KI is used), in addition to other ionic species which have migrated from the body of the earthy matrix towards the electrodes.

The recirculation involves the continuous removal of the anodic and cathodic solutions through the duct 3 and their transfer to the accumulation tank SA1, where they are mixed in order to neutralize the alkalinity and acidity produced by the electrolysis of the water.

As reactions which affect the species containing iodine also take place at the electrodes, the pH of the solution collected in the accumulation tank SA1 is normally basic, approximately ranging from 8 to 10. The pH can in any case be adjusted by the addition of acids or bases, as required, through the duct 8.

The mixture comprising the anodic and cathodic solutions removed from the electrode wells is re-distributed from the accumulation tank SA1 to the wells of origin through duct 1.

The recirculation of the electrode solutions is continued, keeping the ddp applied to the electrodes, until the concentration of one or more of the reference contaminants in the anodic and/or cathodic solutions reaches the pre-established threshold value (for example, when the concentration of mercury reaches 10 ppm).

Once this value has been reached, the recirculation is interrupted and the solutions extracted from the electrode and auxiliary wells are fed to the abatement unit UA of the heavy metals to definitively extract the metallic species present (dewatering phase).

For this purpose, the anodic or cathodic solutions removed from the electrode wells through duct 3, are fed through ducts 6-7 to an accumulation tank SA2 and from there pumped to the abatement unit UA. This unit can comprise, for example, a battery of ion exchange resins.

The solution leaving the abatement unit UA (regenerated complexing solution), free of metallic ionic species, is fed to the accumulation tank SA1 to integrate the complexing solution which will be recirculated to the electrode wells PE and auxiliary wells PA.

The dewatering phase, i.e. the extraction from the wells of the aqueous solutions containing the contaminating metals in complexed form, is effected contemporaneously on the auxiliary wells PA.

The water removed from the auxiliary wells PA through the ducts 4 and 5 is fed to the accumulation tank SA2, where it is mixed with the anodic and cathodic solutions removed from the electrode wells PE. The mixture of the different solutions is then fed to the abatement unit UA for the removal of the metals.

After extracting the metals from the aqueous solutions, the dewatering phase is interrupted. The ddp is applied again to the electrodes and the recirculation of the complexing solution from the accumulation tank SA1 to the electrode wells PE and auxiliary wells PA, is contemporaneously re-started.

As a part of the metallic species present in the soil can be deposited at the electrodes, the process according to the present invention can also comprise a periodic washing of the electrodes in order to remove the contaminants deposited.

The process described above is prolonged until the concentration of the metallic contaminants in the impregnation water re-reaches the pre-established threshold value and a new dewatering phase is subsequently initiated.

The purification process of soil of the present invention has various advantages with respect to the processes *in situ* of the known art.

First of all, as the process of the invention is effected under high saturation conditions of the soil, it effectively removes the heavy metals, in particular metallic mercury, from the earthy matrix and at the same time can be easily effected and managed.

In particular, the process according to the present invention is capable of significantly reducing the times necessary for purifying soil of its contaminants, as it adopts a plurality of auxiliary wells capable of intercepting the contaminants during their migration towards the electrodes.

Furthermore, thanks to the recirculation of the anodic and cathodic solutions, after their mixing, the process of the present invention avoids, or at least reduces, in a simple way, the formation of hydroxides and the consequent obstruction of the pores of the earthy matrix *(clogging).* By preventing the formation of hydroxides and, more generally, the precipitation of undesired species at the electrodes, the overall energy efficiency of the process is also improved.

The effectiveness of the process of the present invention was experimentally verified by applying the process *ex situ* on a sample of soil as described in the following example.

EXAMPLE

A sample of earth to be purified (200 litres) was introduced into a parallelepiped-shaped cell having basic dimensions of 50 x 100 cm and a height of 50 cm (total cell volume equal to 250 litres).

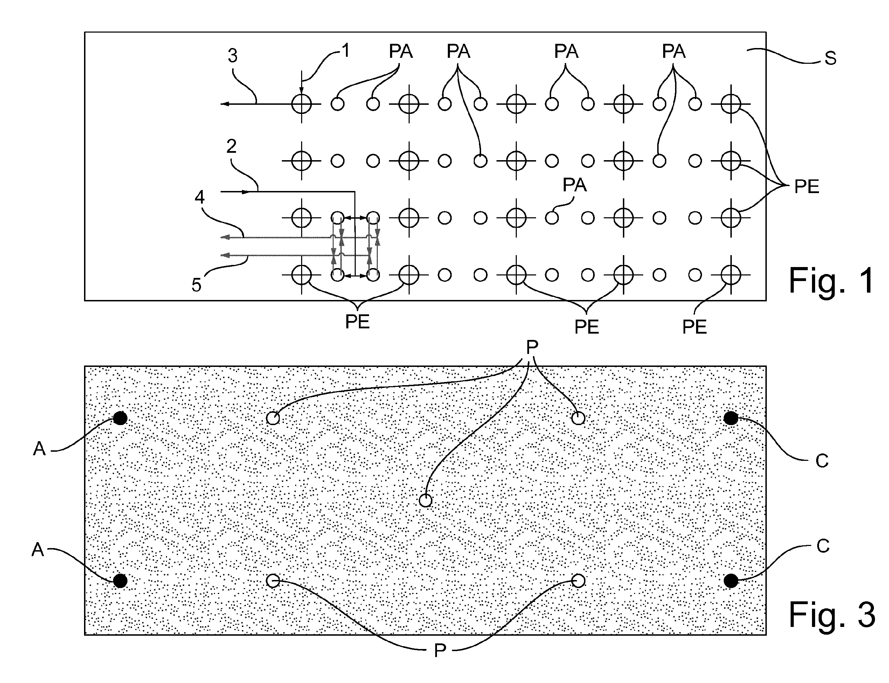

4 electrode wells were inserted into the cell to house 2 anodes and 2 cathodes, as schematically illustrated in figure 3 (the anodes are indicated with the letter "A" and the cathodes with the letter "C").

The anodes were positioned at a distance of 90 cm from the cathodes, maintaining a distance of 5 cm between the electrode wells and the bottom walls of the cell (in order to avoid wall effects which could in some way modify the behaviour of the wells).

5 auxiliary wells (indicated with the letter "P" in figure 3) were positioned in the area between the anode and cathode wells: one central, equidistant from the electrodes, and two pairs respectively positioned at 1/4 and 3/4 of the length of the cell (therefore at a distance of 20 cm from the electrode wells and 25 cm from the central auxiliary well).

The electrodes were connected to a direct current generator capable of supplying a voltage of up to 60 V, with currents up to 30 A.

On the basis of the resistivity value of the soil (equal to 56 Ohm·metre), determined under saturation conditions of the ground with water, it can be estimated that, following the application of a ddp of 50 V, the passage of a current having an intensity equal to about 200 mA can be obtained (the calculation assumes the use of a section of 50 x 40 cm and a distance between the electrodes of 90 cm).

The sample was soaked with a complexing solution consisting of an aqueous solution of KI 0.1 M at neutral pH (the pH was adjusted by the addition of nitric acid).

About 6 litres of complexing solution were used for saturating the sample of earth (200 litres). The increase in salinity (with respect to the saturation conditions with water indicated above) leads to a lowering of the resistivity of the system, with the result that the 200 mA of current previously estimated can be obtained with a ddp initially around 30 V.

The solution present in the electrode wells was removed, mixed and continuously recirculated to the wells of origin through a hydraulic circuit.

The device used for carrying out the test was not equipped with an abatement unit of the metallic ionic species.

The recirculation, under the application of the electric field, was prolonged without interruptions for 15 days, after which a first dewatering was effected by removal of the solutions present in the electrode and auxiliary wells. The concentration of total mercury was quantified on the solutions removed, obtaining the following results:

- electrode wells, average concentration equal to 0.458 mg/L (expressed as Hg),
- auxiliary wells, average concentration equal to 0.559 mg/L (expressed as Hg).

The difference between the above values can be attributed to the electrodeposition of a part of the mercury at the cathodes.

At the end of the dewatering, the purification process was re-continued, introducing into the electrode and auxiliary wells, a new aliquot of the complexing solution previously used. Three further dewatering treatments were effected at an interval of 15 days from each other, obtaining the following results:

- at the second dewatering, average concentration of Hg equal to 0.73 mg/L;
- at the third dewatering, average concentration of Hg equal to 3.13 mg/L;
- at the fourth dewatering, average concentration of Hg equal to 3.20 mg/L.

The increase in the concentration of mercury in ionic form revealed in the subsequent dewatering treatments can be attributed to the dissolution of the metallic mercury with the progress of the purification process.

Two months after the start of the test, the operative conditions were varied, increasing the current established for the system (passage of 1 A, with ddp around 50 V), in order to evaluate the effects of the current intensity on the efficacy of the process. Samplings of the electrolytic solution were therefore taken (mixture of the anodic and cathodic solutions) at an interval of 7 and 15 days, obtaining the following results:

- at the first *sampling,* average concentration of Hg equal to 10.8 mg/L;
- at the second *sampling* (together with the dewatering), average concentration of Hg equal to 7.78 mg/L.

When the experimentation had been completed, a washing of the earth was effected in order to eliminate the electrolytic solution and species dissolved therein, and subsequently a sampling of the soil was taken in order evaluate the quantity of Hg still present therein.

The washing was effected by extracting the complexing solution from the soil and replacing it with an equal volume of water. The water was left in contact with the earth (maintaining the recirculation between the electrode wells) for about an hour, in order to remove the complexed mercury present as ionic species (tetraiodomercurate ion). The washing was repeated three times.

The analytic determinations of the concentration of mercury in the washed earth revealed that:

- the mercury originally present had been significantly abated, as the concentration of total Hg present in the earth had dropped from a value of 22 mg/kg of solid substance (s.s.), before the treatment, to about 8 mg/kg s.s., after the treatment; the removal efficacy of the mercury is therefore higher than 60%.
- after the treatment, the residual mercury in the soil was partly associated with sulfide ions (45% by weight) and partly in metallic form (55% by weight). It should be noted that the mercury present in sulfide form is however in a non-mobile form and as such does not create pollution.

**Claims**

1. A process for purifying an earthy matrix contaminated by heavy metals, comprising at least:

   a) preparing at least one cathode well inside said earthy matrix, said well comprising at least one cathode immersed in an electrolytic solution (cathodic solution) inside a cathode container permeable to liquids and ionic species;
   b) preparing at least one anode well inside said earthy matrix, said well comprising at least one anode immersed in an electrolytic solution (anodic solution) inside an anode container permeable to liquids and ionic species;
   c) introducing water, preferably water comprising a complexing agent (complexing solution), into said earthy matrix so as to impregnate said earthy matrix until a saturation degree equal to at least 70% is reached;
   d) applying a potential difference to said anode and cathode so as to make said contaminating metals migrate in the form of ionic metal complexes;
   e) recovering said contaminating metals from one or more of said anodic solution, cathodic solution and impregnation water of said earthy matrix.

2. The process according to claim 1, wherein said phase c) comprises at least:

   (c1) introducing water into said earthy matrix so as to impregnate said earthy matrix until a saturation degree equal to at least 70% is reached;
   (c2) introducing a complexing solution into said earthy matrix to form ionic metal complexes with said contaminating metals.

3. The process according to claim 1 or 2, wherein said saturation degree of the earthy matrix is equal at least to 80%, preferably equal to at least 90%.

4. The process according to one or more of the previous claims, wherein said water is introduced through one or more of said anode and cathode wells and/or through one or more auxiliary wells hydraulically connected with said earthy matrix.

5. The process according to one or more of the previous claims, wherein said complexing solution is immersed in said earthy matrix by means of one or more of said anode and cathode wells and/or through one or more auxiliary wells hydraulically connected with said earthy matrix.

6. The process according to one or more of the previous claims, wherein said impregnation water is extracted through said auxiliary wells.

7. The process according to one or more of the previous claims comprising, after said phase d) and before said phase e), the following phases:

   (i) extracting at least a part of said anodic and cathodic solutions,

(ii) mixing said solutions extracted,

(iii) recirculate the mixture thus obtained to said phase c).

8. The process according to the previous claim, wherein at least a part of said solutions extracted in phase (i) is subjected to a separation treatment of the contaminating metals with the formation of a regenerated complexing solution.

9. The process according to the previous claim, wherein said regenerated complexing solution is used as complexing solution in said phase c).

10. The process according to one or more of claims 7-9, wherein said recirculating phases (i) - (iii) are carried out contemporaneously with said phase c).

11. The process according to one or more of claims 6-10, wherein at least a part of said impregnation water is subjected to a separation treatment of the contaminating metals.

12. The process according to one or more of the previous claims, wherein, in said phase (e), said contaminating metals are recovered by electrodeposition.

13. The process according to one or more of the previous claims, wherein said phase (e) is effected when the concentration of at least one of said contaminating metals in said anodic solution and/or cathodic solution and/or in said impregnation water reaches a pre-established threshold value.

14. The process according to one or more of the previous claims, **characterized in that** it is carried out *in situ* and said earthy matrix is soil contaminated at least by mercury.

Fig. 1

Fig. 3

Fig. 2

Europäisches
Patentamt

European
Patent Office

Office européen
des brevets

## EUROPEAN SEARCH REPORT

Application Number

EP 13 19 1387

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 090 695 A1 (LEUVEN K U RES & DEV [BE]; METALOGIC NV [BE]) 11 April 2001 (2001-04-11) | 1,5,8,9, 14 | INV. B09C1/08 A62D3/11 |
| Y | * paragraphs [0001], [0005], [0010], [0011], [0013], [0015], [0016], [0018], [0021], [0022], [0023], [0024], [0028], [0030]; claims; figures * | 2-4,6-13 | A62D3/33 C22B43/00 |
| | ----- | | |
| X | J. VIRKUTYTE, M. SILLANPÄÄ, P. LATOSTENMAA: "Electrokinetic soil remediation- critical overview", THE SCIENCE OF THE TOTAL ENVIRONMENT, vol. 289, 31 December 2002 (2002-12-31), pages 97-121, XP002712040, ELSEVIER SCIENCE B.V: | 1,2,5,14 | |
| Y | * page 98 - page 111 * * page 116 * * figures 1,3,4,7, * | 2-4,6-13 | |
| | ----- | | |
| Y | EP 1 671 711 A1 (EBARA CORP [JP]) 21 June 2006 (2006-06-21) * paragraph [0013] - paragraph [0025]; figures * | 12 | TECHNICAL FIELDS SEARCHED (IPC) |
| | ----- | | B09C A62D C22B |
| Y | US 6 221 224 B1 (HITCHENS G DUNCAN [US] ET AL) 24 April 2001 (2001-04-24) * column 6, line 3 - line 16 * | 13 | C02F |
| | ----- | | |
| A | US 6 193 867 B1 (HITCHENS G DUNCAN [US]) 27 February 2001 (2001-02-27) * figures * | 1-14 | |
| | ----- | | |
| A | EP 0 312 174 A1 (HYDRACONSULT BV [NL]) 19 April 1989 (1989-04-19) * claims 1-14 * | 1-14 | |
| | ----- | | |

The present search report has been drawn up for all claims

| Place of search | Date of completion of the search | Examiner |
|---|---|---|
| Munich | 6 February 2014 | Tassinari, Francesca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 19 1387

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2014

| Patent document cited in search report | | | Publication date | Patent family member(s) | | | Publication date |
|---|---|---|---|---|---|---|---|
| EP 1090695 | A1 | | 11-04-2001 | NONE | | | |
| EP 1671711 | A1 | | 21-06-2006 | EP | 1671711 | A1 | 21-06-2006 |
| | | | | JP | 4104157 | B2 | 18-06-2008 |
| | | | | SG | 149818 | A1 | 27-02-2009 |
| | | | | US | 2007142693 | A1 | 21-06-2007 |
| | | | | WO | 2005035149 | A1 | 21-04-2005 |
| US 6221224 | B1 | | 24-04-2001 | NONE | | | |
| US 6193867 | B1 | | 27-02-2001 | NONE | | | |
| EP 0312174 | A1 | | 19-04-1989 | CA | 1338863 | C | 21-01-1997 |
| | | | | DE | 3870797 | D1 | 11-06-1992 |
| | | | | EP | 0312174 | A1 | 19-04-1989 |
| | | | | ES | 2031583 | T3 | 16-12-1992 |
| | | | | GR | 3004510 | T3 | 28-04-1993 |
| | | | | NL | 8702437 | A | 01-05-1989 |
| | | | | US | 5433829 | A | 18-07-1995 |
| | | | | US | 5589056 | A | 31-12-1996 |

EPO FORM P0459

For more details about this annex : see Official Journal of the European Patent Office, No. 12/82

**EP 2 727 663 A1**

**Patent documents cited in the description**

- EP 1090695 A1
- US 5226545 A
- WO 2005053866 A
- US 5589056 A